# EUROPÄISCHE PATENTSCHRIFT

(11) **EP 3 283 925 B1**
(45) Veröffentlichungstag und Bekanntmachung des Hinweises auf die Patenterteilung: **04.01.2023**
(21) Anmeldenummer: 16717608.0
(22) Anmeldetag: 15.04.2016
(51) Int. Cl.: G03H 1/00, G03H 1/02, G03H 1/18, F26B 3/30, B65H 20/22, B65H 23/26, G03B 1/18, B65H 20/04, B65H 20/24, G11B 7/245, G03C 1/74, G03D 13/00, G11B 7/24044, B32B 37/06, B42D 25/328, B32B 37/00

(54) **VERFAHREN UND VORRICHTUNG ZUM HERSTELLEN EINES VOLUMENHOLOGRAMMS IN EINEM FOTOPOLYMERMATERIAL SOWIE VERFAHREN ZUM HERSTELLEN EINES WERT- ODER SICHERHEITSDOKUMENTS**
METHOD AND DEVICE FOR PRODUCING A VOLUME HOLOGRAM IN A PHOTOPOLYMER MATERIAL AND METHOD FOR PRODUCING A VALUABLE OR SECURITY DOCUMENT
PROCÉDÉ ET DISPOSITIF POUR LA FABRICATION D'UN HOLOGRAMME VOLUMIQUE DANS UN MATÉRIAU PHOTOPOLYMÈRE AINSI QUE PROCÉDÉ POUR LA FABRICATION D'UN DOCUMENT DE VALEUR OU DE SÉCURITÉ

(30) Priorität: 16.04.2015 DE 102015206852
(43) Veröffentlichungstag der Anmeldung: 21.02.2018
(73) Patentinhaber: Bundesdruckerei GmbH, 10969 Berlin (DE)
(72) Erfinder: MÄRTENS, Detlef, 13599 Berlin (DE); LEOPOLD, André, 10119 Berlin (DE); GAHLBECK, Jeffry, 15517 Fürstenwalde (DE); KLÜNDER, Kathrin, 10997 Berlin (DE)
(74) Vertreter: Patentanwälte Bressel und Partner mbB
(86) Internationale Anmeldenummer: PCT/EP2016/058314
(87) Internationale Veröffentlichungsnummer: WO 2016/166266

(56) Entgegenhaltungen:
- EP-A1- 0 962 822
- EP-A2- 0 754 987
- WO-A1-2005/078533
- JP-A- H07 319 144
- JP-A- 2001 142 186
- US-A- 4 485 565
- US-A- 4 778 093
- US-A- 5 024 909
- US-A- 5 774 240
- US-A1- 2013 119 182
- US-B1- 6 401 360
- Anonymous: "Infrared heat - emission spectra, infrared emitter, Infrared lamps, IR emitter, infrared oven, infrared drier, carbon infrared, carbon emitter", , 17 March 2012 (2012-03-17), XP055665492, Retrieved from the Internet: URL:https://web.archive.org/web/2012031715 3834/http://www.heraeus-noblelight.com/en/ divisions/infrared/furtherinformation/ir_e mission_spectra/ir_emission_spectra_1.aspx [retrieved on 2020-02-05]
- Germany Heraeus ET AL: "Infrared Emitters for Industrial Processes", , 1 September 2015 (2015-09-01), XP055662400, Retrieved from the Internet: URL:https://www.heraeus.com/media/media/hn g/doc_hng/products_and_solutions_1/infrare d_emitters_and_systems/IR_products_ENupdat e.pdf [retrieved on 2020-01-28]
- Anonymous: "Technologie | MICOR", , 1 January 2021 (2021-01-01), pages 1-7, XP055873200, Retrieved from the Internet: URL:https://www.micor.de/de/technologie [retrieved on 2021-12-15]
- Anonymous: "Infrared Basics and Technology", , 2 July 2011 (2011-07-02), pages 1-56, XP055873251, Retrieved from the Internet: URL:https://web.archive.org/web/2011070206 4109if_/http://heraeus-noblelight.com/medi a/webmedia_local/media/pdf/ip/downloads/IR _basics_and_technology.pdf [retrieved on 2021-12-15]

## Beschreibung

### Gebiet der Erfindung:

Die vorliegende Erfindung betrifft ein Verfahren zum Herstellen eines Volumenhologramms in einem Fotopolymermaterial, ferner eine Vorrichtung zum Herstellen des Volumenhologramms, wobei die Vorrichtung insbesondere dazu ausgebildet ist, das erfindungsgemäße Verfahren zum Herstellen des Volumenhologramms ausführen, sowie ein Verfahren zum Herstellen eines Wert- oder Sicherheitsdokuments, das ein Volumenhologramm aufweist und bei dem das Verfahren zum Herstellen des Volumenhologramms angewendet wird.

### Stand der Technik und Hintergrund der Erfindung:

Wert- oder Sicherheitsdokumente dienen dazu, die Identität einer Person, beispielsweise beim Übertritt einer Landesgrenze, oder die Identität oder Sache oder einen Anspruch, beispielsweise auf Zahlung eines Geldbetrages oder auf Herausgabe eines Produktes oder Erbringung einer Dienstleistung, zu verifizieren. Hierzu ist sicherzustellen, dass das Produkt nicht oder nur mit erheblichem Aufwand imitiert, gefälscht oder verfälscht werden kann. Das Dokument enthält daher Sicherheitsmerkmale, deren Nachahmung äußerst schwierig oder sogar praktisch unmöglich ist. Beispielsweise besteht das Dokument, wie Banknoten, aus einem nicht ohne weiteres verfügbaren Material. Zusätzlich oder alternativ können Sicherheitsmerkmale durch spezielle Farben, beispielsweise lumineszierende oder optisch variable Farben, optische Sicherheitselemente, wie Hologramme, Kippbilder, kinegrafische Objekte, Linsen- oder Prismenarrays, ferner Guillochen, Melierfasern, Sicherheitsfäden und andere, gebildet sein. Des Weiteren ist es auch erforderlich, dass die Wert- oder Sicherheitsdokumente einfach herstellbar sind.

Optische Sicherheitselemente können beispielsweise separat hergestellt und dann als Patches, Sicherheitsfäden, Sicherheitsstreifen oder dergleichen auf eine außenliegende Oberfläche auf dem Wert- oder Sicherheitsdokument oder auf eine innenliegende Oberfläche in dem Wert- oder Sicherheitsdokument aufgeklebt werden. Derartige Sicherheitselemente können optisch variable Elemente sein, sodass damit erzeugte visuell wahrnehmbare Erscheinungen je nach dem Winkel, unter dem das Wert- oder Sicherheitsdokument betrachtet wird, entweder erkennbar sind und/oder unterschiedliche Gestalt annehmen können. Hierzu gehören Oberflächen- und Volumenhologramme. Beispielsweise ergibt sich aus DE 10 2009 007 552 A1, dass Wert- oder Sicherheitsdokumente beispielsweise mit einem auf holografischem, insbesondere volumenholografischem, Wege hergestellten Sicherheitsmerkmal versehen sein können.

Volumenhologramme können unter anderem zur Herstellung von dreidimensionalen holografischen Disksystemen eingesetzt werden, die als Speicher und Korrelationsvorrichtungen mit hoher Speicherdichte und Korrelationsrate dienen. Hierzu wird beispielsweise das von DuPont hergestellte Fotopolymer HRF-150 verwendet, das zur Herstellung von Transmissionshologrammen mit hoher Auflösung geeignet ist. Die Hologramme werden mit blaugrünem Licht aufgezeichnet. Zur Herstellung der Hologramme wird ein 38 µm dicker Fotopolymerfilm in Form eines Sandwichs zwischen zwei Mylar^{®}-Folien (Marke von DuPont Teijin Film, US) gebildet und mit einer Vorrichtung zur Erzeugung von Hologrammen belichtet. Nach der Belichtung wird das Hologramm durch Bestrahlen mit UV-Strahlung fixiert. (Kevin ,Curtis und Demetri Psaltis: "Characterization of the DuPont Photopolymer for Three-Dimensional Holographic Storage", Applied Optics, Vol. 33, Nr. 23, Seiten 5396-5399, August 1994).

In DE 10 2006 023 159 A1 ist ein Herstellungsverfahren für Dokumente mit Hologramm beschrieben, bei dem in einem ersten Schritt ein Hologramm in eine Fotofolie belichtet und fixiert wird und in einem zweiten Schritt die Fotofolie auf einen Dokumententräger aufgeklebt wird. Zur Fixierung wird die Fotofolie durch Bestrahlen mit UV-Licht und anschließendes Trocknen in einem Trockner fixiert.

In DE 10 2007 019 837 A1 ist ein Verfahren zur Erzeugung der individuellen holografischen Personalinformation eines Volumenhologramms beschrieben, bei dem ein Fotopolymerfilm verwendet wird, der auf einen holografischen Master laminiert wird und anschließend alle optischen Standardelemente des Masters mit Laserlicht in den Film kopiert werden. Der belichtete Fotopolymerfilm wird in üblicher Weise entwickelt, nämlich mit UV-Licht fixiert und bei höheren Temperaturen, bevorzugter Weise bei 120 °C, gebacken.

Die US 5,024,909 A offenbart ein Verfahren zum Formen eines Hologramms, wobei das Hologramm durch Infrarotstrahlung erwärmt wird. Der Oberbegriff des Anspruchs 1 bzw. 8 entspricht diesem Dokument.

Die US 5 774 240 A offenbart, dass eine Hologramm-Aufzeichnungsplatte mit einer Infraroterzeugungseinrichtung bestrahlt wird.

Die US 6 401 360 B1 offenbart Fotoverarbeitung und insbesondere eine Vorrichtung und ein Verfahren zum Trocknen von fotoempfindlichem Material.

Die EP 0 962 822 A1 offenbart ebenfalls Fotoverarbeitung und eine Vorrichtung und ein Verfahren zum Trocknen von fotoempfindlichem Material.

Die EP 0 754 987 A2 offenbart eine Gegenstandsplatte zum Aufzeichnen von Hologrammen durch Belichtung, ein Hologramm-Herstellungsverfahren und einen hologrammaufgezeichneten Artikel.

Das Dokument "Anonymous: "Infrared heat-emission spectra, infrared emitter, infrared lamps, IR emitter infrared oven, infrared drier, carbon infrared, carbon emitter, 17. März 2012 (2012-03-17, XP055665492, gefunden im Internet: URL: https://web.archive.org/web/20120317153834/http://www.heraeus-noblelight.com /en/divisions/infrared/furtherinformation/ir_emission_spectra/ir_emission_spectra_ 1.aspx " offenbart Wellenlängenbereiche von verschiedenen Infrarot-Emittertypen.

Das Dokument "Germany Heraeus ET AL: "Infrared Emitters for Industrial Processes", 1. September 2015 (2015-09-01 ), XP055662400, Gefunden im Internet: URL:https://www.heraeus.com/media/media/hng/doc_hng/products_and_solutions_ 1 /infrared_emitters_and_systems/IR_products_ENupdate.pdf" offenbart Infrarot-Emitter für industrielle Prozesse.

Das Dokument "Anonymous: "Technologie 1 MICOR", 1. Januar2021 (2021-01-01), Seiten 1-7, XP055873200, Gefunden im Internet:URL:https://www.micor.de/de/technologie" offenbart das Trocknen mit kurzwelliger Infrarotstrahlung.

Das Dokument "Anonymous: "Infrared Basics and Technology", 2. Juli 2011 (2011-07-02), Seiten 1-56, XP055873251, Gefunden im Internet: URL:https://web.archive.org/web/20110702064109if_/http://heraeusnoblelight.com/media/webm edia_local/media/pdf/ip/downloads/IR_basics_and_technology.pdf " offenbart Infrarot-Basiswissen und Infrarottechnologie.

### Der Erfindung zugrunde liegende Probleme:

Es hat sich gezeigt, dass eine Fixierung der mit den herkömmlichen Methoden erzeugten Volumenhologramme mittels Wärme aufwändig ist. Denn die Wärmebehandlung erfordert eine relativ lange Prozessierungsdauer. Daher muss die Vorrichtung zur Fixierung groß ausgelegt werden, um einen ausreichenden Durchsatz gewährleisten zu können. Daraus ergeben sich verschiedene Nachteile, beispielsweise eine große Wärmekapazität, die in der Vorrichtung gespeichert ist, damit verbunden eine große Trägheit des Systems bei einer Temperaturanpassung sowie hohe Anlagen- und Betriebskosten. Darüber hinaus hat sich auch gezeigt, dass die Qualität und Optik der erzeugten Materialoberflächen nicht immer den erforderlichen Standards genügen.

### Definitionen:

Soweit in der Beschreibung und in den Ansprüchen der vorliegenden Anmeldung der Begriff 'Volumenhologramm' verwendet wird, ist darunter ein Hologramm zu verstehen, bei dem das Volumen des Aufnahmematerials (eines Fotopolymermaterials bzw. -laminats) zur Speicherung des holografischen Bildes genutzt wird. Dies soll allerdings nicht ausschließen, dass die Dicke des Aufnahmematerials in der Größenordnung der Wellenlänge der zum Aufzeichnen verwendeten elektromagnetischen Strahlung liegt, d.h. nur wenig größer oder sogar kleiner ist als die Wellenlänge der Strahlung, wenn auch sich die bevorzugte Anwendung der vorliegenden Erfindung auf solche Aufnahmematerialien bezieht, deren Dicke wesentlich größer ist als die Wellenlänge der Strahlung, beispielsweise mindestens größer als die doppelte Wellenlänge. Die Dicke des Aufnahmematerials ist zu großen Dicken hin durch die gewünschten physikalischen Eigenschaften und die Wirtschaftlichkeit begrenzt. Das Volumenhologramm kann ein Transmissionshologramm oder ein Reflexionshologramm sein.

Soweit in der Beschreibung und in den Ansprüchen der vorliegenden Anmeldung der Begriff 'Wert- oder Sicherheitsdokument' verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, Jeton oder ein anderes Dokument zu verstehen. Das Wert- oder Sicherheitsdokument kann beispielsweise auch eine Smartcard sein. Das Wert- oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- oder Sicherheitsdokument ist im Allgemeinen ein Laminat aus mehreren Dokumentenlagen, die passergenau unter Wärmeeinwirkung und unter erhöhtem Druck flächig miteinander verbunden sind. Diese Dokumente sollen den normierten Anforderungen genügen, beispielsweise gemäß ISO 10373, ISO/IEC 7810, ISO 14443 in der zum Zeitpunkt der Priorität der vorliegenden Anmeldung gültigen Fassung. Die Dokumentenlagen bestehen beispielsweise aus einem Trägermaterial, das sich für eine Lamination eignet. Das Wert- oder Sicherheitsdokument kann zusätzlich zu dem Volumenhologramm, das mit dem Verfahren gemäß der vorliegenden Erfindung hergestellt wird, weitere Sicherheitsmerkmale aufweisen, die individualisierend, insbesondere personalisierend, oder nicht individualisierend sind. Als derartige Sicherheitsmerkmale kommen Guillochen, Wasserzeichen, Prägedrucke, ein Sicherheitsfaden, Mikroschrift, Kippbilder, Hologramme, optisch variable Pigmente, lumineszierende Farben, Durchlichtpasser, Melierfasern und dergleichen in Betracht. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein.

Das Wert- oder Sicherheitsdokument kann aus einem oder mehreren Polymeren gebildet sein, die ausgewählt sind aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, oder Papier oder Pappe oder Glas oder Metall oder Keramik. Außerdem kann das Dokument auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Dokument aus 3 bis 12, vorzugsweise 4 bis 10, Folien hergestellt. Die Folien können ferner Druckschichten tragen.

Soweit nachfolgend jeweils Begriffe in der Singularform verwendet werden, beispielsweise 'NIR-Bestrahlungsvorrichtung', 'Reflektorvorrichtung', 'UV-Strahlungsvorrichtung' usw., so können darunter jeweils auch die entsprechenden Pluralformen zu verstehen sein, nämlich 'NIR-Bestrahlungsvorrichtungen', 'Reflektorvorrichtungen', 'UV-Strahlungsvorrichtungen', usw., sofern nicht ausdrücklich etwas anderes angegeben ist. Entsprechendes gilt auch im umgekehrten Sinne.

### Grundzüge der Erfindung und bevorzugte Ausführungsformen:

Gemäß einem ersten Aspekt betrifft die vorliegende Erfindung ein Verfahren zum Herstellen eines Volumenhologramms in einem Fotopolymermaterial / einer Fotopolymerschicht nach Anspruch 1. Das Verfahren umfasst in einem ersten Verfahrensschritt das Belichten des Fotopolymermaterials mit einem das Volumenhologramm bildenden Belichtungsmuster und in einem zweiten Verfahrensschritt das Fixieren des Volumenhologramms durch Einbringen von Wärmeenergie in das belichtete Fotopolymermaterial, sodass das Fotopolymermaterial aushärtet. Zusätzlich kann das Fixieren auch das Bestrahlen mit elektromagnetischer Strahlung, insbesondere mit UV-Strahlung, umfassen. Diese zusätzliche Behandlung kann insbesondere vor der Wärmebehandlung durchgeführt werden. Die UV-Behandlung kann zu einer Vorpolymerisation des belichteten Fotopolymermaterials führen. Ob eine UV-Behandlung erforderlich ist oder nicht, hängt von der Art des eingesetzten Fotopolymermaterials ab. Die anschließende Wärmebehandlung führt zur abschließenden Polymerisation des belichteten Fotopolymermaterials. Weiter wird die Wärmeenergie durch Einstrahlen von elektromagnetischer Strahlung im kurzwelligen Infrarot-Spektralbereich eingebracht. Diese elektromagnetische Strahlung liegt dabei im nahen Infrarot-Bereich, ganz besonders bevorzugt im Wellenlängenbereich von 760 nm bis 2000 nm (2 µm), am meisten bevorzugt im Wellenlängenbereich von 800 nm bis 1200 nm (1,2 µm).

Gemäß einem zweiten Aspekt betrifft die vorliegende Erfindung ein Verfahren zum Herstellen eines Wert- oder Sicherheitsdokuments nach Anspruch 7. Hierzu umfasst das Verfahren das Herstellen eines Dokumentenrohlings und das Applizieren eines Volumenhologramms auf den Dokumentenrohling. Erfindungsgemäß wird das Volumenhologramm mit dem vorgenannten Herstellverfahren gemäß der vorliegenden Erfindung hergestellt.

Gemäß einem dritten Aspekt betrifft die vorliegende Erfindung eine Vorrichtung zum Herstellen eines Volumenhologramms in einem Fotopolymermaterial, insbesondere in einer Fotopolymerschicht, nach Anspruch 8. Diese Vorrichtung ist insbesondere zur Durchführung des Verfahrens zum Herstellen eines Volumenhologramms in dem Fotopolymermaterial gemäß der vorliegenden Erfindung ausgebildet. Die Vorrichtung weist eine Belichtungsvorrichtung zum Belichten des Fotopolymermaterials mit einem das Volumenhologramm bildenden Belichtungsmuster und eine Fixiervorrichtung zum Fixieren des Volumenhologramms durch Einbringen von Wärmeenergie in das belichtete Fotopolymermaterial auf. Erfindungsgemäß weist die Fixiervorrichtung eine NIR-Bestrahlungsvorrichtung (NIR: nahes Infrarot) auf, in der das Fotopolymermaterial mit elektromagnetischer Strahlung im kurzwelligen Infrarot-Spektralbereich, d.h. mit elektromagnetischer Strahlung im nahen Infrarot-Bereich, besonders bevorzugt im Wellenlängenbereich von 760 nm bis 2000 nm und am meisten bevorzugt von 800 nm bis 1200 nm, bestrahlt wird. Die Fixiervorrichtung weist mindestens zwei NIR-Strahler auf, die die genannte elektromagnetische Strahlung emittieren. Die Fixiervorrichtung kann zusätzlich auch eine UV-Strahlungsvorrichtung aufweisen. Eine derartige UV-Strahlungsvorrichtung weist mindestens einen UV-Strahler auf, der die UV-Strahlung emittiert, beispielsweise Strahlung im UVA-Spektralbereich (380 nm bis 315 nm). Der UV-Strahlungsvorrichtung kann die NIR-Bestrahlungsvorrichtung in der Durchlaufrichtung des Fotopolymermaterials durch die Herstellvorrichtung nachgelagert sein. Wie vorstehend erläutert, dient die UV-Strahlungsvorrichtung dazu, das belichtete Fotopolymermaterial vorzupolymerisieren. Die anschließende Wärmebehandlung in der NIR-Bestrahlungsvorrichtung führt zur abschließenden Polymerisation des belichteten Fotopolymermaterials.

Durch die Wärmebehandlung des belichteten Fotopolymermaterials mit elektromagnetischer Strahlung im kurzwelligen Infrarot-Spektralbereich anstelle einer herkömmlichen Behandlung mit Warmluft wird ein sekundenschneller thermischer Prozess zur Fixierung des Hologramms in dem Fotopolymermaterial ermöglicht. Diese signifikante Verkürzung der Prozessierungsdauer gegenüber der herkömmlichen Wärmebehandlung ist auf die Eigenschaften des Fotopolymermaterials zurückzuführen, die elektromagnetische Strahlung in dem genannten Spektralbereich nur wenig und damit im gesamten Volumen des Fotopolymermaterials praktisch gleichmäßig zu absorbieren. Dieses Verhalten gilt auch bei der üblichen Verwendung eines Fotopolymerlaminats, in der das Fotopolymermaterial zwischen anderen Polymerfolien sandwichartig angeordnet ist. Dadurch kann die Strahlung weit in das Material eindringen und wird darin gleichmäßig absorbiert. Folglich wird eine homogene Erwärmung ermöglicht, sodass weiter innen liegende Materialbereiche nicht wie bei herkömmlichen Verfahren allein durch die langsam wirkenden Wärmeleitungsprozesse erhitzt werden, sondern unmittelbar durch Strahlungsabsorption, sodass eine Erwärmung spontan und damit sehr schnell durch Volumenbeheizung eintritt.

Aus der Erfindung ergeben sich damit viele Vorteile gegenüber einer herkömmlichen Vorgehensweise zum Fixieren des durch Belichtung erzeugten Hologramms, nämlich eine gleichmäßige und schnelle Polymerisation des belichteten Holografiematerials, eine gleichmäßige Qualität und Optik der Materialoberflächen, ein effizientes Ausbacken des Holografiematerials, eine Steigerung der Produktionsleistung durch einen optimierten Trocknungsprozess, eine Energie- und Kostenverringerung bei der Trocknung (beim Fixieren), eine maximale Prozesssicherheit sowie die Möglichkeit, das erfindungsgemäße Konzept in bestehende und neue Vorrichtungen zum Herstellen von Volumenhologrammen problemlos integrieren zu können.

Für die Erzeugung der elektromagnetischen Strahlung im kurzwelligen Infrarot-Spektralbereich stehen handelsübliche NIR-Bandstrahler zur Verfügung, die elektromagnetische Strahlung beispielsweise mit einem Emissionsmaximum von 1200 nm abstrahlen. Die Strahlung kann mittels elliptischer oder parabolischer Reflektoren diffus oder fokussiert auf das Fotopolymermaterial gerichtet werden. Diese NIR-Strahler können insbesondere stabförmig ausgebildet sein, sodass in Verbindung mit einem parabolischen Reflektor ein gleichmäßig ausgeleuchtetes Strahlungsfeld erzeugt wird, in dem sich das Fotopolymermaterial während der Bestrahlung befindet.

In einer bevorzugten Weiterbildung der vorliegenden Erfindung wird die elektromagnetische NIR-Strahlung während einer Zeitdauer von 0,5 min bis 10 min, weiter bevorzugt von 0,75 min bis 5 min und am meisten bevorzugt von 1 min bis 2 min, eingestrahlt. Diese Zeitdauer reicht aus, um das Hologramm in dem Fotopolymermaterial zu fixieren. Diese Zeitdauer ist deutlich kürzer als die mit manchen herkömmlichen Trocknungsverfahren benötigte Prozessierungsdauer, beispielsweise die Prozessierungsdauer bei einer Warmlufttrocknung. In letzterem Falle ist es im Allgemeinen erforderlich, das Fotopolymermaterial über eine Zeitdauer von 15 min bis 20 min zu behandeln, um die gewünschte Polymerisation des Materials zu erreichen. Die kurze Fixierungszeit mit dem erfindungsgemäßen Verfahren ermöglicht eine kompakte Bauweise der Fixiervorrichtung und erfordert außerdem einen nur geringen Energieaufwand.

In einer weiteren bevorzugten Weiterbildung der vorliegenden Erfindung wird das Fotopolymermaterial durch die Einstrahlung der elektromagnetischen NIR-Strahlung auf eine Temperatur von nicht mehr als 160 °C, weiter bevorzugt von nicht mehr als 150 °C und am meisten bevorzugt von nicht mehr als 120 °C, erwärmt. Dadurch wird eine schonende Behandlung des Fotopolymermaterials erreicht. Durch die Volumenbeheizung des Materials wird zudem vermieden, dass sich im Material lokale Temperaturspitzen einstellen.

In einer weiteren bevorzugten Weiterbildung der vorliegenden Erfindung wird die Temperatur des Fotopolymermaterials während des Einbringens der Wärmeenergie gemessen. Hierzu kann die NIR-Bestrahlungsvorrichtung zusätzlich Temperatursensoren aufweisen. Damit ist es möglich, die Temperatur in dem Fotopolymermaterial innerhalb eines engen Bereiches einzustellen. Hierzu kann die Leistung eines NIR-Strahlers in der NIR-Bestrahlungsvorrichtung in Abhängigkeit von der gemessenen Temperatur in dem Fotopolymermaterial geregelt werden. Dies ermöglicht zum einen, die Temperatur auf einen Mindestwert einzustellen, damit das Hologramm im Fotopolymermaterial so schnell wie möglich fixiert wird, und zum anderen, dass eine maximale Temperatur nicht überschritten wird, womit gewährleistet wird, dass das Fotopolymermaterial thermisch nicht überlastet wird.

In einer weiteren bevorzugten Weiterbildung der vorliegenden Erfindung wird das Fotopolymermaterial in der Belichtungsvorrichtung mit Laserstrahlung beaufschlagt, um das Volumenhologramm zu erzeugen. Wenn ein mehrfarbiges Volumenhologramm erzeugt werden soll, wird Laserstrahlung mit unterschiedlichen Frequenzen eingesetzt, beispielsweise durch Verwendung von drei Laservorrichtungen, die beispielsweise rote bzw. grüne bzw. blaue Strahlung emittieren.

In der vorliegenden Erfindung wird das Fotopolymermaterial in einem Rolle-zu-Rolle-Prozess verarbeitet, sodass das Herstellverfahren kontinuierlich durchgeführt werden kann. Hierzu wird das Fotopolymermaterial bandförmig und auf einer Zuführrolle aufgewickelt vorgelegt. Die Zuführrolle bildet eine Versorgungsvorrichtung für die Fixiervorrichtung mit dem bandförmigen Fotopolymermaterial. Für die Prozessierung wird das Material von der Rolle abgewickelt und gelangt zunächst in die Belichtungsvorrichtung, in der das Material mit dem das Volumenhologramm bildenden Belichtungsmuster belichtet wird. Anschließend gelangt das bandförmige Material in die Fixiervorrichtung, die zumindest die NIR-Bestrahlungsvorrichtung aufweist. In der Fixiervorrichtung wird das Fotopolymermaterial mit der elektromagnetischen Strahlung im kurzwelligen Infrarot-Spektralbereich bestrahlt. Gegebenenfalls weist die Fixiervorrichtung auch die UV-Strahlungsvorrichtung auf, mit der das in der Belichtungsvorrichtung belichtete Fotopolymermaterial vorpolymerisiert wird. Die UV-Strahlungsvorrichtung ist in der Durchlaufrichtung des Fotopolymermaterials vorzugsweise vor der NIR-Bestrahlungsvorrichtung angeordnet, sodass das Material zuerst die UV-Strahlungsvorrichtung und erst dann die NIR-Bestrahlungsvorrichtung durchläuft. Nach der Prozessierung des Bandmaterials in der Fixiervorrichtung gelangt es zu einer Aufwickelvorrichtung, in der das Material auf eine Aufwickelrolle aufgewickelt wird.

In einer besonders bevorzugten Ausführungsform der vorliegenden Erfindung wird das Fotopolymermaterial vor dem Belichten durch eine erste Puffervorrichtung geführt, in der das Fotopolymermaterial abschnittsweise zwischengespeichert wird. Diese erste Puffervorrichtung ist in der Durchlaufrichtung des Fotopolymermaterials durch die Herstellvorrichtung vor der Belichtungsvorrichtung angeordnet. Damit wird bezweckt, dass das Fotopolymermaterial für die Belichtung in der Belichtungsvorrichtung ortsfest fixiert werden kann, um eine präzise Übertragung des das Volumenhologramm bildenden Belichtungsmusters auf das Material zu ermöglichen. Dies erfordert einen intermittierenden (getakteten) Transport des Fotopolymermaterials durch die Belichtungsvorrichtung. Nach dem Belichten eines Abschnittes des Bandmaterials wird das Bandmaterial in der Belichtungsvorrichtung weiterbefördert, damit ein neuer Abschnitt mit einem weiteren Belichtungsmuster belichtet werden kann. Zwischen diesen Beförderungsschritten ist das Fotopolymermaterial in der Belichtungsvorrichtung fixiert und damit immobil. Damit das Bandmaterial von der Versorgungsvorrichtung dennoch kontinuierlich an die Belichtungsvorrichtung weiterbefördert werden kann, puffert die erste Puffervorrichtung die intermittierende Bewegung in der Belichtungsvorrichtung ab. Hierzu wird ein Abschnitt des Bandmaterials während des Zeitabschnittes, in dem das Bandmaterial in der Belichtungsvorrichtung ortsfest gehalten und belichtet wird, in die erste Puffervorrichtung hineinbefördert, ohne zu der Belichtungsvorrichtung weiter transportiert zu werden. Erst wenn die Belichtung abgeschlossen ist und das Bandmaterial in der Belichtungsvorrichtung weiter befördert wird, wird der in die erste Puffervorrichtung hineinbeförderte Bandmaterialabschnitt in die Belichtungsvorrichtung nachgeliefert.

In einer weiteren besonders bevorzugten Ausführungsform der vorliegenden Erfindung wird das Fotopolymermaterial nach dem Belichten und vor dem Einbringen der Wärmeenergie durch eine zweite Puffervorrichtung geführt, in der das Fotopolymermaterial abschnittsweise zwischengespeichert wird. Die zweite Puffervorrichtung ist in der Durchlaufrichtung des Fotopolymermaterials durch die Herstellvorrichtung hinter der Belichtungsvorrichtung und vor der Fixiervorrichtung angeordnet. Wie im Falle der Beförderung von der Versorgungsvorrichtung zur Belichtungsvorrichtung durch die erste Puffervorrichtung wird die intermittierende Bewegung des Bandmaterials auch bei der weiteren Beförderung von der Belichtungsvorrichtung zur Fixiervorrichtung durch die zweite Puffervorrichtung gepuffert. Auch hierdurch wird ein kontinuierlicher Bandtransport zur Fixiervorrichtung erreicht, während das Bandmaterial in der Belichtungsvorrichtung intermittierend bewegt wird.

Erfindungsgemäß wird die Wärmeenergie von beiden Seiten in das belichtete Fotopolymermaterial eingestrahlt. Dadurch wird eine sehr homogene Einbringung der Wärmeenergie in das Fotopolymermaterial erreicht. Hierzu sind NIR-Strahler an beiden Seiten des Durchlaufweges für das bandförmige Fotopolymermaterial angeordnet, d.h. an jeder Seite des Fotopolymermaterials jeweils mindestens ein NIR-Strahler.

Dabei wird die Wärmeenergie mittels eines der beiden die elektromagnetische Strahlung emittierenden NIR-Strahler, der an einer ersten Seite des Fotopolymermaterials angeordnet ist, in das Fotopolymermaterial eingebracht und nach Durchstrahlen des Fotopolymermaterials an einer Reflektorvorrichtung, die an einer zweiten der ersten Seite gegenüberliegenden Seite des Fotopolymermaterials angeordnet ist, reflektiert. An einer zweiten der ersten Seite gegenüberliegenden Seite des Fotopolymermaterials ist also eine Reflektorvorrichtung für die von der NIR-Bestrahlungsvorrichtung emittierte und durch das Fotopolymermaterial hindurchgestrahlte elektromagnetische Strahlung angeordnet, die dem NIR-Strahler gegenüberliegend angeordnet ist.

Da das Fotopolymermaterial bandförmig ausgebildet ist und in einem Rolle-zu-Rolle-Prozess prozessiert wird, befinden sich in der NIR-Strahlungsvorrichtung erfindungsgemäß mindestens zwei NIR-Strahler, die entlang eines Durchlaufweges durch die Herstellvorrichtung hintereinander angeordnet sind.

Weiter erfindungsgemäß liegen die mindestens zwei NIR-Strahler in der NIR-Strahlungsvorrichtung an einer Seite des Durchlaufweges jeweils einer Reflektorvorrichtung an der jeweils anderen Seite des Durchlaufweges gegenüber, wobei die NIR-Strahler und die Reflektorvorrichtungen an den jeweiligen Seiten alternierend, d.h. in der Durchlaufrichtung hintereinander abwechselnd, angeordnet sind.

Das Fotopolymermaterial kann in üblicher Art und Weise verwendet werden. Insbesondere kann das Fotopolymermaterial durch eine Fotopolymerschicht gebildet sein, in der das Hologramm erzeugt wird und die sich zwischen einer Trägerfolie und einer Schutzfolie befindet. Die Fotopolymerschicht bildet zusammen mit diesen Folien ein Fotopolymerlaminat, das in der Herstellvorrichtung prozessiert wird. Die Fotopolymerschicht kann beispielsweise eine Dicke von 10 µm haben, während die Trägerfolie eine Dicke von 50 µm und die Schutzfolie eine Dicke von 21 µm haben können. Grundsätzlich sind für diese Schichten und Folien auch andere Dicken denkbar. Die Trägerfolie und die Schutzfolie können aus PET hergestellt sein. Das Fotopolymerlaminat liegt in Form eines bandförmiger Materials vor (Bandmaterial), das auf einer Zuführrolle aufgewickelt vorgelegt, für die Prozessierung (Bildung des Volumenhologramms) von der Zuführrolle abgewickelt und prozessiert und nach der Prozessierung wieder auf eine Aufwickelrolle aufgewickelt wird.

Zum Applizieren des Hologramms auf einen Dokumentenrohling wird ein dem Hologramm entsprechender Abschnitt von dem Fotopolymermaterial von dem Bandmaterial vereinzelt, beispielsweise abgeschnitten. Vor dem Applizieren des Hologramms auf den Rohling wird die Trägerfolie von dem Fotopolymermaterial abgezogen. Vorzugsweise wird auch die Schutzfolie von dem Fotopolymermaterial abgezogen und zwar nach dem Aufbringen des Laminats aus Fotopolymermaterial/-schicht und Schutzfolie auf den Rohling. Zum Applizieren des Hologramms auf den Rohling wird vorzugsweise ein Kleber verwendet. Das belichtete und fixierte Fotopolymermaterial kann das Wert- oder Sicherheitsdokument ganzflächig bedecken oder nur teilweise. Das Hologramm kann einen Teil der von dem Fotopolymermaterial eingenommenen Fläche einnehmen. Zum Schutz gegen Beschädigungen und Manipulation befindet sich in dem fertigen Dokument vorzugsweise eine transparente Schutzschicht über dem aufgebrachten Material, die durch eine Lackschicht gebildet werden kann.

Das Hologramm kann individualisierend sein, d.h. dass das Hologramm einem bestimmten Subjekt (Person, Tier, Gegenstand) zuordenbar ist oder eine Kennzeichnung bildet, die das Dokument selbst oder eine Gruppe von Dokumenten eindeutig bezeichnet, oder es ist personalisierend, d.h. dass das Hologramm einer Person zuordenbar ist. Oder das Hologramm ist nicht individualisierend und dient lediglich der Verifikation des Dokuments. Demgemäß kann das Hologramm beispielsweise das Passbild der Person, der das Dokument zugeordnet ist, eine Seriennummer oder ein Wappen zeigen.

Zur Herstellung des Wert- oder Sicherheitsdokuments mit dem erfindungsgemäß hergestellten Volumenhologramm wird zunächst ein Dokumentenrohling hergestellt. Auf diesen wird das fertig gestellte Hologramm aufgebracht, beispielsweise aufgeklebt. Der Dokumentenrohling kann in üblicher Weise beispielsweise durch Laminieren von Polymerfolien hergestellt werden und, abgesehen von dem Volumenhologramm, bereits alle oder fast alle übrigen Sicherheitsmerkmale des fertigen Wert- oder Sicherheitsdokuments enthalten. Nach dem Aufbringen des Fotopolymermaterials mit dem darin enthaltenen Hologramm kann schließlich noch eine Schutzschicht aufgebracht werden, die das Hologramm gegen Beschädigungen und Manipulation schützt.

Die vorliegende Erfindung wird nachfolgend anhand von Figuren näher erläutert, wobei die dargestellten Zeichnungen und Beispiele lediglich exemplarischen Charakter haben und keine Einschränkung hinsichtlich der Tragweite der beschriebenen Erfindung darstellen. Es zeigen im Einzelnen:
- Fig. 1: ein Wert- oder Sicherheitsdokument mit einem Hologramm in einer schematischen isometrischen Darstellung;
- Fig. 2: das Wert- oder Sicherheitsdokument von Fig. 1 in einer schematischen Schnittdarstellung;
- Fig. 3: ein Fotopolymerlaminat zur Herstellung von Hologrammen in einer schematischen Schnittdarstellung;
- Fig. 4: eine Darstellung einer erfindungsgemäßen Vorrichtung zum Herstellen eines Volumenhologramms in einem Fotopolymermaterial in einer schematischen Seitenansicht;
- Fig. 5: die spektrale Abhängigkeit der Emission eines NIR-Strahlers;
- Fig. 6: eine schematische Darstellung der Schritte des beanspruchten Verfahrens zum Herstellen eines Volumenhologramms in einem Fotopolymermaterial.

In den Figuren bezeichnen gleiche Bezugszeichen gleiche Elemente und/oder Elemente mit derselben Funktion. Die Figuren zeigen die Gegenstände nicht in jedem Falle maßstäblich zueinander. Ferner sind auch die Größenverhältnisse einzelner Elemente zu denen anderer in einer Figur oder zwischen den Figuren nicht in jedem Falle maßstäblich zueinander dargestellt.

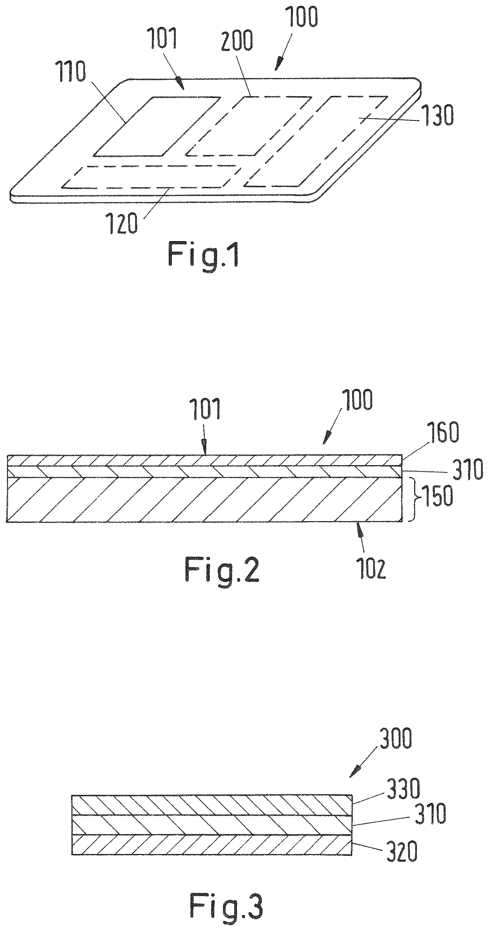

Ein Wert- oder Sicherheitsdokument 100 in Form einer Ausweiskarte ist in Fig. 1 dargestellt. Diese Karte weist vorzugsweise die normierten Maße im Format ID 1 gemäß DIN/IEC 7810 in der zum Zeitpunkt der Priorität der vorliegenden Anmeldung gültigen Fassung auf. Die Karte kann in Form eines Laminats auf der Basis von PC und PET hergestellt sein, die teilweise opak (innere Lagen) und teilweise transparent (äußere Lagen) sind. Durch innere opake Lagen kann eine sich innen befindende elektronische Schaltung nach außen hin gegen Sicht abgeschirmt sein. Die Karte hat eine Vorderseite 101 und eine Rückseite 102 (in Fig. 1 nicht dargestellt). Auf der Vorderseite sind ein Gesichtsbild des Inhabers in Form eines Passphotos 110 sowie Datenfelder 120, 130, die Daten des Inhabers sowie weitere Daten wiedergeben, wie eine Seriennummer und dergleichen, sichtbar. Außerdem befindet sich auf der Vorderseite ein Hologramm 200, das in einem Fotopolymermaterial gebildet ist (in Fig. 1 nicht dargestellt).

In Fig. 2 ist die Karte 100 von Fig. 1 in einer schematischen Schnittdarstellung gezeigt, wobei auf die Darstellung von Einzelheiten des Kartenmaterials unterhalb des belichteten und fixierten Fotopolymermaterials 310 verzichtet wurde, beispielsweise eine sich im Karteninneren befindende elektronische Schaltung, wie eine RFID-Schaltung mit RFID-Chip und RFID-Antenne, und verschiedene Lagenstrukturen. Auf die Oberseite des Kartenrohlings 150 ist Fotopolymermaterial 310, das den Rohling beispielsweise ganzflächig bedeckt, aufgebracht/aufgeklebt. Da die Trägerfolie 320 und die Schutzfolie 330 des Fotopolymerlaminats 300 abgezogen sind, verbleibt auf der Karte allein die belichtete und fixierte Fotopolymerschicht (Fotopolymermaterial). In dieses Material ist ein Volumenhologramm 200 mit dem erfindungsgemäßen Verfahren einbelichtet und darin fixiert (Fig. 1). Zum Schutz gegen Beschädigungen und Manipulation ist zusätzlich auf die Fotopolymerschicht eine Schutzschicht 160 aufgebracht, die beispielsweise aus einem transparenten, farblosen Schutzlack gebildet sein kann.

In Fig. 3 ist ein Fotopolymerlaminat 300 in einer schematischen Schnittansicht gezeigt. Dieses Laminat ist leicht handhabbar, während das Fotopolymermaterial 310 äußerst empfindlich ist. Die Fotopolymerschicht 310 ist in dem Laminat sandwichartig zwischen einer unteren Trägerfolie 320 und einer oberen Schutzfolie 330 angeordnet. Die Trägerfolie und die Schutzfolie sind beispielsweise aus PET gebildet. Die Dicke der Trägerfolie beträgt beispielsweise 50 µm, die der Schutzfolie 21 µm und die der Fotopolymerschicht beispielsweise 10 µm.

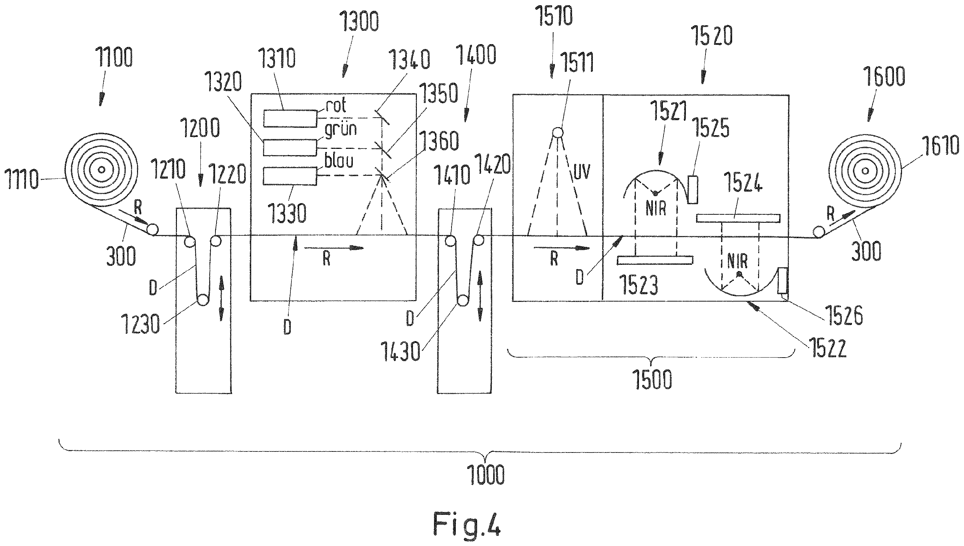

In Fig. 4 ist eine erfindungsgemäße Vorrichtung 1000 zum Herstellen eines Volumenhologramms 200 in einem Fotopolymermaterial 310, das in Form von Fotopolymerlaminat 300 bereitgestellt wird, schematisch dargestellt. Es handelt sich um eine Vorrichtung, in der ein Rolle-zu-Rolle-Prozess durchgeführt wird. Hierzu ist eine Versorgungsvorrichtung 1100 mit einer Zuführrolle 1110 mit noch nicht prozessiertem Fotopolymermaterial vorgesehen. Auf der Zuführrolle ist das Fotopolymerlaminat aufgewickelt und kann durch Abwickeln bereitgestellt werden.

Der Versorgungsvorrichtung 1100 in der Durchlaufrichtung R des Fotopolymerlaminats 300 in der Herstellvorrichtung 1000 nachgelagert ist eine erste Puffervorrichtung 1200. Diese Vorrichtung kann wie dargestellt drei Umlenkrollen 1210, 1220, 1230 enthalten, die das Fotopolymerlaminat auf einem gewundenen Durchlaufweg D durch diese Vorrichtung führen. Von diesen Umlenkrollen sind die beiden oberen Umlenkrollen 1210, 1220 ortsfest in der Vorrichtung angeordnet, während die mittige untere Umlenkrolle 1230 vertikal verschiebbar ist, sodass sich die Länge des in der Vorrichtung befindlichen Abschnittes des Fotopolymerlaminats verändern kann.

Der ersten Puffervorrichtung 1200 in der Durchlaufrichtung R des Fotopolymerlaminats 300 in der Herstellvorrichtung 1000 nachgelagert ist eine Belichtungsvorrichtung 1300, mit der das durch diese hindurchlaufende Fotopolymerlaminat mit dem das Volumenhologramm 200 bildenden Belichtungsmuster belichtet wird. Hierzu sind vorliegend drei Laservorrichtungen 1310, 1320, 1330 gezeigt, deren Laserstrahlen über Umlenkspiegel 1340, 1350, 1360 auf das Fotopolymerlaminat bzw. das darin befindliche Fotopolymermaterial 310 gerichtet werden. Diese drei Laser emittieren Laserlicht mit unterschiedlichen Wellenlängen, sodass ein mehrfarbiges Hologramm erzeugt werden kann. Beispielsweise emittiert die erste Laservorrichtung 1310 rote, die zweite Laservorrichtung 1320 grüne und die dritte Laservorrichtung 1330 blaue Laserstrahlung. Die Laserstrahlen werden mit geeigneten optischen Mitteln (nicht dargestellt) auf das Fotopolymermaterial fokussiert, sodass auch sehr kleine Belichtungsstrukturen erzeugt werden können. Die hierfür erforderlichen optischen Elemente sind nicht dargestellt.

Der Belichtungsvorrichtung 1300 in der Durchlaufrichtung R des Fotopolymerlaminats 300 in der Herstellvorrichtung 1000 nachgelagert ist eine zweite Puffervorrichtung 1400. Wie die erste Puffervorrichtung 1200 kann auch diese wie dargestellt drei Umlenkrollen 1410, 1420, 1430 enthalten, die das Fotopolymerlaminat auf einem gewundenen Durchlaufweg D durch die Vorrichtung führen. Von diesen Umlenkrollen sind die beiden oberen Umlenkrollen 1410, 1420 ortsfest in der Vorrichtung angeordnet, während die mittige untere Umlenkrolle 1430 vertikal verschiebbar ist, sodass sich die Länge des in der Vorrichtung befindlichen Abschnittes des Fotopolymerlaminats verändern kann.

Der zweiten Puffervorrichtung 1400 in der Durchlaufrichtung R des Fotopolymerlaminats 300 in der Herstellvorrichtung 1000 nachgelagert ist die Fixiervorrichtung 1500. Diese weist eine UV-Strahlungsvorrichtung 1510 und eine NIR-Bestrahlungsvorrichtung 1520 auf. Der UV-Strahlungsvorrichtung 1510 ist die NIR-Bestrahlungsvorrichtung 1520 in der Durchlaufrichtung R des Fotopolymerlaminats durch die Herstellvorrichtung nachgelagert.

In der UV-Strahlungsvorrichtung ist ein UV-Strahler 1511 angeordnet, der beispielsweise UV-Strahlung im UVA-Spektralbereich aussendet. Der UV-Strahler kann beispielsweise eine Gasentladungslampe sein, wie eine Osram L18/965-Gasentladungslampe. Diese Strahlung trifft auf das durch diese Vorrichtung hindurchgeführte Fotopolymerlaminat 300. Dadurch wird das Fotopolymermaterial 310 entsprechend dem durch die Belichtung generierten Volumenhologramm 200 vorpolymerisiert.

In der NIR-Bestrahlungsvorrichtung 1520 sind zwei NIR-Strahler angeordnet und zwar ein erster NIR-Strahler 1521 oberhalb des Durchlaufweges D für das Fotopolymerlaminat 300 und ein zweiter NIR-Strahler 1522 unterhalb des Durchlaufweges. Diese Strahler erzeugen NIR-Strahlung innerhalb eines Wellenlängenbereiches von beispielsweise 800 nm bis 2000 nm. Die NIR-Strahler können handelsübliche Vorrichtungen sein, beispielsweise Strahler vom TYP MICOR-*KIR (Micor GmbH, DE), die ein Emissionsmaximum der Wellenlänge bei 1,2 µm haben. Diese Strahler können beispielsweise parabolförmige Reflektorausführungen aufweisen, sodass ein gleichmäßig ausgeleuchtetes Strahlungsfeld erzeugt wird.

Den beiden NIR-Strahlern 1521, 1522 sind Reflektorvorrichtungen 1523, 1524 auf der jeweils anderen Seite des Durchlaufweges D gegenüberliegend angeordnet. Die von den NIR-Strahlern an jeweils einer Seite des Fotopolymerlaminats 300 erzeugte NIR-Strahlung tritt durch das Laminatmaterial hindurch, trifft auf dessen anderer Seite auf die Reflektorvorrichtungen und wird von diesen wieder zurückgeworfen. Dadurch gelangt es erneut in den Bereich des Fotopolymermaterials 310. Das Material wird auf diese Weise auch in dessen Volumen noch gleichmäßiger mit Infrarot-Strahlung beaufschlagt als ohne die Reflektorvorrichtungen. Dadurch dass die NIR-Strahler zudem an unterschiedlichen Seiten des Durchlaufweges angeordnet sind, wird das Fotopolymermaterial beim Durchlaufen der NIR-Bestrahlungsvorrichtung 1520 nochmals weiter vergleichmäßigt mit NIR-Strahlung in dessen Volumen beaufschlagt.

Zur schonenden und dennoch schnellen Prozessierung des Fotopolymerlaminats 300 in der NIR-Bestrahlungsvorrichtung 1520 dienen Temperatursensoren 1525, 1526, die an den NIR-Strahlern 1521, 1522 und diesen in der Durchlaufrichtung R nachgelagert angeordnet sind. Mit diesen Sensoren wird die Temperatur des Fotopolymerlaminats 300 bzw. des Fotopolymermaterials 310 ermittelt. Durch eine Steuerung/Regelung (nicht dargestellt) kann die Leistung der NIR-Strahler gesteuert werden, sodass die Temperatur des Laminats/Materials weitgehend innerhalb eines vorgegebenen Temperaturbereiches konstant gehalten wird. Dadurch wird eine schonende und dennoch schnelle Aushärtung des Materials erreicht.

Der Fixiervorrichtung 1500 in der Durchlaufrichtung R des Fotopolymerlaminats 300 in der Herstellvorrichtung 1000 nachgelagert ist eine Aufwickelvorrichtung 1600 mit einer Aufwickelrolle 1610. Das Laminat wird auf der Aufwickelrolle zu einer Rolle aufgewickelt.

Die fertig gestellte Rolle des Fotopolymerlaminats 300 enthält eine Vielzahl von Hologrammen 200, die in dem Fotopolymermaterial 310 gebildet sind. Zur weiteren Verarbeitung werden die einzelnen Abschnitte mit jeweils einem Hologramm 200 auf einen zugehörigen Dokumentenrohling 150 aufgeklebt. Hierzu werden zunächst die Trägerfolie 320 und nach dem Aufbringen des Laminats aus Fotopolymermaterial und Schutzfolie 330 auf den Rohling auch die Schutzfolie abgezogen, sodass sich schließlich allein das Fotopolymermaterial 310 auf dem Dokumentenrohling befindet.

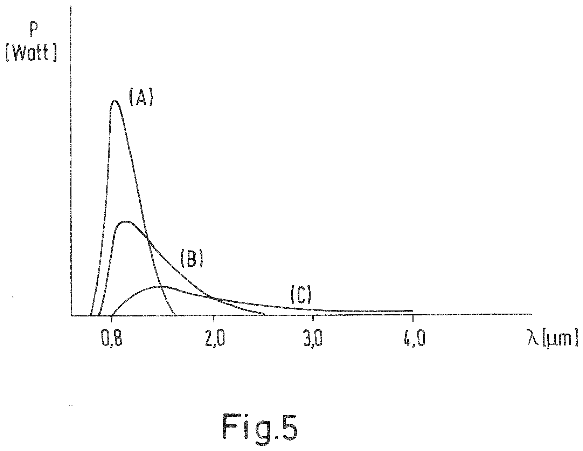

In Fig. 5 ist die Leistung P [Watt] der von den NIR-Strahlern 1521, 1522 emittierten NIR-Strahlung in Abhängigkeit von der Wellenlänge λ [µm] beispielhaft aufgezeichnet. Je nach Wellenlänge, bei der ein Leistungsmaximum auftritt, ist die Leistung in diesem Maximum unterschiedlich hoch. Je energiereicher die Strahlung ist, d.h. je kürzer die Wellenlänge ist, desto kleiner ist der Wellenlängenbereich, auf den sich die Gesamtleistung verteilt. Wegen einer relativ schmalen Emissionsbande bei kurzerwelliger Strahlung ist die Leistung im Fall (A) größer als im Fall (B), bei dem das Emissionsmaximum bei größerer Wellenlänge liegt. Am niedrigsten ist das Leistungsmaximum im Fall (C), bei dem dieses bei der größten Wellenlänge der betrachteten Fälle liegt.

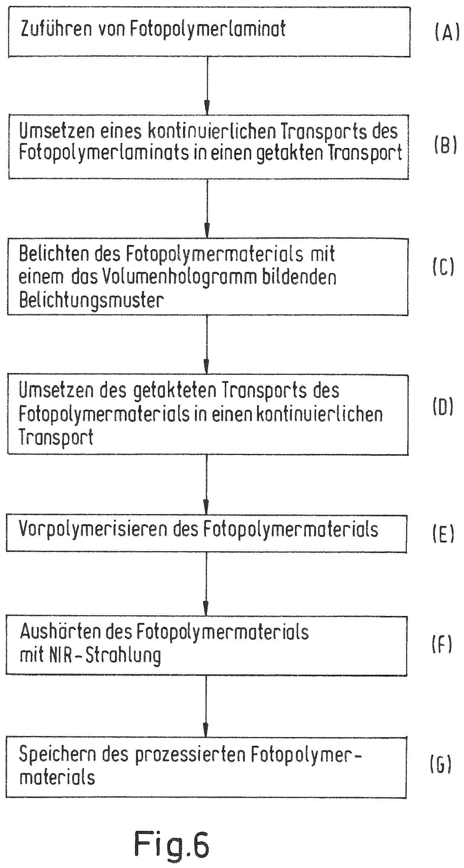

Das erfindungsgemäße Verfahren zum Herstellen von Hologrammen 200 ist in Fig. 6 schematisch skizziert:
Zur Herstellung von Hologrammen 200 wird demgemäß zunächst das Fotopolymerlaminat 300 bereitgestellt, im Rolle-zu-Rolle-Prozess in Form eines bandförmigen Materials, das auf der Zuführrolle 1110 aufgewickelt vorliegt (Verfahrensschritt (A)). Dieses Laminat enthält das Fotopolymermaterial 310, in dem ein Hologramm 200 gebildet werden soll.

Im Rolle-zu-Rolle-Prozess wird das Fotopolymermaterial 310 / Fotopolymerlaminat 300 anschließend in die erste Puffervorrichtung 1200 überführt, um den kontinuierlichen Transport des Materials bzw. Laminats beim Zuführen in einen getakteten Transport in der nachfolgenden Belichtungsvorrichtung 1300 umzusetzen (Verfahrensschritt (B)).

Danach wird das Fotopolymermaterial 310 / Fotopolymerlaminat 300 in die Belichtungsvorrichtung überführt. Dort wird das Fotopolymermaterial mit einem das Volumenhologramm 200 bildenden Belichtungsmuster belichtet (Verfahrensschritt (C)).

Im Rolle-zu-Rolle-Prozess wird das Fotopolymermaterial 310 / Fotopolymerlaminat 300 anschließend in die zweite Puffervorrichtung 1400 überführt, wo der getaktete Transport in der Belichtungsvorrichtung 1300 wieder in einen kontinuierlichen Transport umgesetzt wird (Verfahrensschritt (D)).

Danach gelangt das Fotopolymermaterial 310 / Fotopolymerlaminat 300 in die Fixiervorrichtung 1500 und in dieser zunächst in die UV-Strahlungsvorrichtung 1510, in der das Fotopolymermaterial vorpolymerisiert wird (Verfahrensschritt (E)).

Anschließend wird das Fotopolymermaterial 310 / Fotopolymerlaminat 300 in die NIR-Bestrahlungsvorrichtung 1520 befördert, wo es ausgehärtet wird. Dort wird das Material bzw. Laminat mit NIR-Strahlung bestrahlt (Verfahrensschritt (F)).

Schließlich wird das Fotopolymermaterial 310 / Fotopolymerlaminat 300 gespeichert und hierzu im Rolle-zu-Rolle-Prozess zu einer Aufwickelvorrichtung 1600 mit einer Aufwickelrolle 1610 befördert, wo es rollenförmig aufgewickelt wird (Verfahrensschritt (G)).

Das erfindungsgemäße Verfahren umfasst zumindest die Verfahrensschritte (C) und (F), vorzugsweise zusätzlich auch den weiteren Verfahrensschritt (E). Die Verfahrensschritte (B) und (D) sind vorteilhaft.

### Bezugszeichenliste:

- 100: Wert- oder Sicherheitsdokument, (Ausweis-)Karte
- 101: Vorderseite
- 102: Rückseite
- 110: Passphoto
- 120: Datenfeld
- 130: Datenfeld
- 150: Kartenrohling
- 160: Schutzschicht
- 200: (Volumen-)Hologramm
- 300: Fotopolymerlaminat
- 310: Fotopolymermaterial, Fotopolymerschicht
- 320: Trägerfolie
- 330: Schutzfolie
- 1000: Vorrichtung zum Herstellen eines Volumenhologramms
- 1100: Versorgungsvorrichtung
- 1110: Zuführrolle
- 1200: erste Puffervorrichtung
- 1210: ortsfeste Umlenkrolle
- 1220: ortsfeste Umlenkrolle
- 1230: vertikal verschiebbare Umlenkrolle
- 1300: Belichtungsvorrichtung
- 1310: Laservorrichtung für rote Laserstrahlung
- 1320: Laservorrichtung für grüne Laserstrahlung
- 1330: Laservorrichtung für blaue Laserstrahlung
- 1340: Umlenkspiegel für rote Laserstrahlung
- 1350: Umlenkspiegel für grüne Laserstrahlung
- 1360: Umlenkspiegel für blaue Laserstrahlung
- 1400: zweite Puffervorrichtung
- 1410: ortsfeste Umlenkrolle
- 1420: ortsfeste Umlenkrolle
- 1430: vertikal verschiebbare Umlenkrolle
- 1500: Fixiervorrichtung
- 1510: UV-Strahlungsvorrichtung
- 1511: UV-Strahler
- 1520: NIR-Bestrahlungsvorrichtung
- 1521: erster NIR-Strahler
- 1522: zweiter NIR-Strahler
- 1523: erste Reflektorvorrichtung
- 1524: zweite Reflektorvorrichtung
- 1525: erster Temperatursensor
- 1526: zweiter Temperatursensor
- 1600: Aufwickelvorrichtung
- 1610: Aufwickelrolle
- D: Durchlaufweg
- NIR: nahes Infrarot
- R: Durchlaufrichtung
- UV: Ultraviolett

## Patentansprüche

1. Verfahren zum Herstellen eines Volumenhologramms (200) in einem Fotopolymermaterial (310), wobei das Verfahren das Belichten des Fotopolymermaterials (310) mit einem das Volumenhologramm (200) bildenden Belichtungsmuster und das Fixieren des Volumenhologramms (200) durch Einbringen von Wärmeenergie in das belichtete Fotopolymermaterial (310) umfasst,
wobei die Wärmeenergie durch Einstrahlen von elektromagnetischer Strahlung im kurzwelligen Infrarot-Spektralbereich (NIR) eingebracht wird,
**dadurch gekennzeichnet, dass**
das Fotopolymermaterial (310) in einem Rolle-zu-Rolle-Prozess verarbeitet wird, wobei die Wärmeenergie von beiden Seiten in das belichtete Fotopolymermaterial (310) eingestrahlt wird, wobei mindestens zwei NIR-Strahler (1521, 1522) entlang eines Durchlaufweges (D) des Fotopolymermaterials (310) hintereinander angeordnet sind, wobei die mindestens zwei NIR-Strahler (1521, 1522) an einer Seite des Durchlaufweges (D) jeweils einer Reflektorvorrichtung (1523, 1524) an der jeweils anderen Seite des Durchlaufweges (D) gegenüberliegen, wobei die NIR-Strahler (1521, 1522) und die Reflektorvorrichtungen (1523, 1524) an den jeweiligen Seiten alternierend angeordnet sind.

2. Verfahren nach Anspruch 1, **dadurch gekennzeichnet, dass** die elektromagnetische Strahlung (NIR) während einer Zeitdauer von 1 bis 2 min eingestrahlt wird.

3. Verfahren nach einem der vorstehenden Ansprüche, **dadurch gekennzeichnet, dass** das Fotopolymermaterial (310) durch die Einstrahlung der elektromagnetischen Strahlung (NIR) auf eine Temperatur von nicht mehr als 160 °C erwärmt wird.

4. Verfahren nach einem der vorstehenden Ansprüche, **dadurch gekennzeichnet, dass** während des Einbringens der Wärmeenergie eine Temperatur des Fotopolymermaterials (310) ermittelt wird.

5. Verfahren nach einem der vorstehenden Ansprüche, **dadurch gekennzeichnet, dass** das Fotopolymermaterial (310) vor dem Belichten durch eine erste Puffervorrichtung (1200) geführt wird, in der das Fotopolymermaterial (310) abschnittsweise zwischengespeichert wird.

6. Verfahren nach Anspruch 5, **dadurch gekennzeichnet, dass** das Fotopolymermaterial (310) nach dem Belichten und vor dem Einbringen der Wärmeenergie durch eine zweite Puffervorrichtung (1400) geführt wird, in der das belichtete Fotopolymermaterial (310) abschnittsweise zwischengespeichert wird.

7. Verfahren zum Herstellen eines Wert- oder Sicherheitsdokuments (100), umfassend das Herstellen eines Dokumentenrohlings (150) und das Applizieren eines Volumenhologramms (200) auf den Dokumentenrohling (150), wobei das Volumenhologramm (200) mit dem Verfahren nach einem der Ansprüche 1 bis 6 hergestellt wird.

8. Vorrichtung (1000) zum Herstellen eines Volumenhologramms (200) in einem Fotopolymermaterial (310), insbesondere zur Durchführung des Verfahrens nach einem der Ansprüche 1 bis 6, wobei die Vorrichtung (1000) eine Belichtungsvorrichtung (1300) zum Belichten des Fotopolymermaterials (310) mit einem das Volumenhologramm (200) bildenden Belichtungsmuster und eine Fixiervorrichtung (1500) zum Fixieren des Volumenhologramms (200) durch Einbringen von Wärmeenergie in das belichtete Fotopolymermaterial (310) aufweist,
wobei die Fixiervorrichtung (1500) eine NIR-Bestrahlungsvorrichtung (1520) aufweist, in der das Fotopolymermaterial (310) mit elektromagnetischer Strahlung im kurzwelligen Infrarot-Spektralbereich (NIR) bestrahlt wird
**dadurch gekennzeichnet, dass**
das Fotopolymermaterial (310) in einem Rolle-zu-Rolle-Prozess verarbeitet wird, wobei die Wärmeenergie von beiden Seiten in das belichtete Fotopolymermaterial (310) eingestrahlt wird, wobei mindestens zwei NIR-Strahler (1521, 1522) entlang eines Durchlaufweges (D) des Fotopolymermaterials (310) hintereinander angeordnet sind, wobei die mindestens zwei NIR-Strahler (1521, 1522) an einer Seite des Durchlaufweges (D) jeweils einer Reflektorvorrichtung (1523, 1524) an der jeweils anderen Seite des Durchlaufweges (D) gegenüberliegen, wobei die NIR-Strahler (1521, 1522) und die Reflektorvorrichtungen (1523, 1524) an den jeweiligen Seiten alternierend angeordnet sind.

9. Vorrichtung (1000) nach Anspruch 8, **dadurch gekennzeichnet, dass** die Vorrichtung (1000) ferner eine erste Puffervorrichtung (1200) aufweist, die in einer Durchlaufrichtung (R) des Fotopolymermaterials (310) durch die Herstellvorrichtung (1000) vor der Belichtungsvorrichtung (1300) angeordnet ist.

10. Vorrichtung (1000) nach Anspruch 9, **dadurch gekennzeichnet, dass** die Vorrichtung (1000) ferner eine zweite Puffervorrichtung (1400) aufweist, die in einer Durchlaufrichtung (R) des Fotopolymermaterials (310) durch die Herstellvorrichtung (1000) hinter der Belichtungsvorrichtung (1300) und vor der Fixiervorrichtung (1500) angeordnet ist.

## Claims

1. Method for producing a volume hologram (200) in a photopolymer material (310), the method comprising exposing the photopolymer material (310) with an exposure pattern that forms the volume hologram (200) and fixing the volume hologram (200) by introducing thermal energy into the exposed photopolymer material (310), the thermal energy being introduced by radiating in electromagnetic radiation in the short-wave infrared spectral region (NIR),
**characterized in that**
the photopolymer material (310) is processed in a roll-to-roll process, the thermal energy being radiated into the exposed photopolymer material (310) from both sides, at least two NIR radiators (1521, 1522) being arranged in succession along a travel path (D) of the photopolymer material (310), the at least two NIR radiators (1521, 1522) on one side of the travel path (D) each being opposite a reflector device (1523, 1524) on the other side of the travel path (D), the NIR radiators (1521, 1522) and the reflector devices (1523, 1524) being arranged alternately on the respective sides.

2. Method according to claim 1, **characterized in that** the electromagnetic radiation (NIR) is radiated in over a period of 1 to 2 min.

3. Method according to any of the preceding claims, **characterized in that** the photopolymer material (310) is heated to a temperature of no greater than 160°C by radiating in the electromagnetic radiation (NIR).

4. Method according to any of the preceding claims, **characterized in that** a temperature of the photopolymer material (310) is determined while the thermal energy is being introduced.

5. Method according to any of the preceding claims, **characterized in that** before exposure, the photopolymer material (310) is guided through a first buffer device (1200), in which the photopolymer material (310) is temporarily stored in portions.

6. Method according to claim 5, **characterized in that** after exposure and before introducing the thermal energy, the photopolymer material (310) is guided through a second buffer device (1400), in which the exposed photopolymer material (310) is temporarily stored in portions.

7. Method for producing a value document or security document (100), comprising producing a document blank (150) and applying a volume hologram (200) to the document blank (150), wherein the volume hologram (200) is produced using the method according to any of claims 1 to 6.

8. Device (1000) for producing a volume hologram (200) in a photopolymer material (310), in particular for carrying out the method according to any of claims 1 to 6, the device (1000) comprising an exposure device (1300) for exposing the photopolymer material (310) with an exposure pattern that forms the volume hologram (200) and a fixing device (1500) for fixing the volume hologram (200) by introducing thermal energy into the exposed photopolymer material (310), the fixing device (1500) comprising an NIR radiation device (1520), in which the photopolymer material (310) is irradiated with electromagnetic radiation in the short-wave infrared spectral region (NIR), **characterized in that** the photopolymer material (310) is processed in a roll-to-roll process, the thermal energy being radiated into the exposed photopolymer material (310) from both sides, at least two NIR radiators (1521, 1522) being arranged in succession along a travel path (D) of the photopolymer material (310), the at least two NIR radiators (1521, 1522) on one side of the travel path (D) each being opposite a reflector device (1523, 1524) on the other side of the travel path (D), the NIR radiators (1521, 1522) and the reflector devices (1523, 1524) being arranged alternately on the respective sides.

9. Device (1000) according to claim 8, **characterized in that** the device (1000) further comprising a first buffer device (1200), which is arranged in a travel direction (R) of the photopolymer material (310) through the production device (1000) upstream of the exposure device (1300).

10. Device (1000) according to claim 9, **characterized in that** the device (1000) further comprising a second buffer device (1400), which is arranged in a travel direction (R) of the photopolymer material (310) through the production device (1000) downstream of the exposure device (1300) and upstream of the fixing device (1500).

## Revendications

1. Procédé pour produire un hologramme volumique (200) dans un matériau photopolymère (310), dans lequel le procédé comprend l'exposition du matériau photopolymère (310) à un motif d'exposition formant l'hologramme volumique (200) et la fixation de l'hologramme volumique (200) par introduction d'énergie calorifique dans le matériau photopolymère (310) exposé,
dans lequel l'énergie calorifique est introduite par injection d'un rayonnement électromagnétique dans le domaine spectral des infrarouges de faible longueur d'onde (NIR),
**caractérisé en ce que**
le matériau photopolymère (310) est traité dans un processus rouleau à rouleau, dans lequel l'énergie calorifique est injectée à partir des deux faces dans le matériau photopolymère (310) exposé, dans lequel au moins deux émetteurs NIR (1521, 1522) sont disposés l'un derrière l'autre le long d'une voie de passage (D) du matériau photopolymère (310), dans lequel les au moins deux émetteurs NIR (1521, 1522) sont en regard l'un de l'autre sur une face de la voie de passage (D) respectivement d'un dispositif réflecteur (1523, 1524) sur l'autre face respective de la voie de passage (D), dans lequel les émetteurs NIR (1521, 1522) et les dispositifs réflecteurs (1523, 1524) sont disposés de manière alternée sur les faces respectives.

2. Procédé selon la revendication 1, **caractérisé en ce que** le rayonnement électromagnétique (NIR) est injecté pendant une durée de 1 à 2 min.

3. Procédé selon l'une quelconque des revendications précédentes, **caractérisé en ce que** le matériau photopolymère (310) est chauffé à une température non supérieure à 160 °C par l'injection du rayonnement électromagnétique (NIR).

4. Procédé selon l'une quelconque des revendications précédentes, **caractérisé en ce qu'**une température du matériau photopolymère (310) est déterminée pendant l'introduction de l'énergie calorifique.

5. Procédé selon l'une quelconque des revendications précédentes, **caractérisé en ce que** le matériau photopolymère (310) est guidé avant l'exposition à travers un premier dispositif tampon (1200), dans lequel le matériau photopolymère (310) est stocké temporairement sur certaines parties.

6. Procédé selon la revendication 5, **caractérisé en ce que** le matériau photopolymère (310) est guidé après l'exposition et avant l'introduction de l'énergie calorifique à travers un deuxième dispositif tampon (1400), dans lequel le matériau photopolymère (310) exposé est stocké temporairement sur certaines parties.

7. Procédé pour produire un document de valeur ou de sécurité (100), comprenant la production d'une ébauche de document (150) et l'application d'un hologramme volumique (200) sur l'ébauche de document (150), dans lequel l'hologramme volumique (200) est produit avec le procédé selon l'une quelconque des revendications 1 à 6.

8. Dispositif (1000) pour produire un hologramme volumique (200) dans un matériau photopolymère (310), en particulier pour la mise en œuvre du procédé selon l'une quelconque des revendications 1 à 6, dans lequel le dispositif (1000) présente un dispositif d'exposition (1300) pour l'exposition du matériau photopolymère (310) à un motif d'exposition formant l'hologramme volumique (200) et un dispositif de fixation (1500) pour la fixation de l'hologramme volumique (200) par introduction d'énergie calorifique dans le matériau photopolymère (310) exposé, dans lequel le dispositif de fixation (1500) présente un dispositif d'irradiation NIR (1520), dans lequel le matériau photopolymère (310) est irradié avec un rayonnement électromagnétique dans le domaine spectral des infrarouges proches de faible longueur d'onde (NIR)
**caractérisé en ce que**
le matériau photopolymère (310) est traité dans un processus rouleau à rouleau, dans lequel l'énergie calorifique est injectée à partir des deux faces dans le matériau photopolymère (310) exposé, dans lequel au moins deux émetteurs NIR (1521, 1522) sont disposés l'un derrière l'autre le long d'une voie de passage (D) du matériau photopolymère (310), dans lequel les au moins deux émetteurs NIR (1521, 1522) sont en regard l'un de l'autre sur une face de la voie de passage (D) respectivement d'un dispositif réflecteur (1523, 1524) sur l'autre face respective de la voie de passage (D), dans lequel les émetteurs NIR (1521, 1522) et les dispositifs réflecteurs (1523, 1524) sont disposés de manière alternée sur les faces respectives.

9. Dispositif (1000) selon la revendication 8, **caractérisé en ce que** le dispositif (1000) présente en outre un premier dispositif tampon (1200), qui est disposé devant le dispositif d'exposition (1300) dans une direction de passage (R) du matériau photopolymère (310) à travers le dispositif de production (1000).

10. Dispositif (1000) selon la revendication 9, **caractérisé en ce que** le dispositif (1000) présente en outre un deuxième dispositif tampon (1400), qui est disposé derrière le dispositif d'exposition (1300) et devant le dispositif de fixation (1500) dans une direction de passage (R) du matériau photopolymère (310) à travers le dispositif de production (1000).
